# EUROPÄISCHE PATENTSCHRIFT

(11) **EP 3 069 571 B1**
(45) Veröffentlichungstag und Bekanntmachung des Hinweises auf die Patenterteilung: **13.01.2021**
(21) Anmeldenummer: 14795840.9
(22) Anmeldetag: 11.11.2014
(51) Int. Cl.: H05B 45/305

(54) **LED-KONVERTER UND VERFAHREN ZUM STEUERN EINER WANDLERSCHALTUNG EINES LED-KONVERTERS**
LED CONVERTER AND METHOD FOR CONTROLLING A CONVERTER CIRCUIT OF A LED-CONVERTER
CONVERTISSEUR DE DEL ET PROCÉDÉ DE COMMANDE D'UN CIRCUIT TRANSDUCTEUR DE CONVERTISSEUR DE DEL

(30) Priorität: 11.11.2013 DE 102013222892
(43) Veröffentlichungstag der Anmeldung: 21.09.2016
(73) Patentinhaber: Tridonic GmbH & Co. KG, 6851 Dornbirn (AT); Tridonic Jennersdorf GmbH, 8380 Jennersdorf (AT)
(72) Erfinder: BARTH, Alexander, A-6861 Alberschwende (AT); HORN, Frank, CH-8765 Engi (CH); JUEN, Reinhold, A-6850 Dornbirn (AT); LOCHMANN, Frank, 88147 Esseratsweiler (DE); MARENT, Günter, A-6781 Bartholomäberg (AT); MOOSMANN, Florian, A-6835 Zwischenwasser (AT); PACHLER, Peter, A-8042 Graz (AT)
(74) Vertreter: Banzer, Hans-Jörg
(86) Internationale Anmeldenummer: PCT/EP2014/074262
(87) Internationale Veröffentlichungsnummer: WO 2015/067819

(56) Entgegenhaltungen:
- EP-A2- 0 074 848
- WO-A1-2008/154736
- WO-A1-2013/092656
- WO-A1-2013/092662
- WO-A2-2009/141111
- DE-A1-102010 031 244
- DE-A1-102012 007 450
- DE-A1-102012 014 308
- DE-A1-102012 017 397
- US-A1- 2012 274 298
- US-A1- 2013 250 627
- ANONYMOUS: "AN-9729. LED Application Design Guide Using Half-Bridge LLC Resonant Converter for 100W Street Lighting", INTERNET CITATION, 16. November 2012 (2012-11-16), Seiten 1-14, XP002707759, Gefunden im Internet: URL:http://www.fairchildsemi.com/an/AN/AN- 9729.pdf [gefunden am 2013-07-30]

## Beschreibung

Die Erfindung betrifft Betriebsgeräte für Leuchtmittel. Die Erfindung betrifft insbesondere Betriebsgeräte mit einer Wandlerschaltung, die eine Potentialbarriere aufweisen.

Wandlerschaltungen mit Potentialtrennung dienen zur galvanisch entkoppelten Übertragung von elektrischer Energie von einer Eingangsseite zu einer Ausgangsseite. Derartige Wandlerschaltungen werden in verschiedenen Anwendungen zur Strom- oder Spannungsversorgung, wie beispielsweise in getakteten Schaltnetzteilen, eingesetzt. Bei getakteten Wandlerschaltungen werden steuerbare Schaltmittel getaktet betrieben, um elektrische Energie auf die Ausgangsseite zu übertragen. Eine galvanisch entkoppelte Energieübertragung kann durch Verwendung eines Transformators oder eines anderen Übertragers erzielt werden. Eine derartige galvanische Trennung bzw. Potentialtrennung wird aus Sicherheitsgründen häufig bei Betriebsgeräten für Leuchtmittel gefordert.

Es kann wünschenswert sein, Information zwischen den galvanisch getrennten Bereichen eines Betriebsgeräts für ein Leuchtmittel zu übertragen. Hierzu können Optokoppler verwendet werden, um Information über die Potentialbarriere zu übertragen. Die Verwendung derartiger Komponenten erhöht die Komplexität und die Kosten der Schaltung.

Die US 2013/250627 A1 betrifft einen Leistungswandler mit einem verringerten Stromverbrauch in einer Bereitschaftsbetriebsart. Der Wandler umfasst einen Transformator, der eine Primärseite und eine Sekundärseite umfasst; eine Primärseitenschaltungsanordnung, die mit der Primärseite des Transformators gekoppelt ist; eine Sekundärseitenschaltungsanordnung, die mit der Sekundärseite des Transformators gekoppelt ist, wobei die Sekundärseitenschaltungsanordnung eingerichtet ist, mindestens eins von einer Ausgangsspannung und einem Ausgangsstrom bereitzustellen; und eine Koppelkomponente, die eingerichtet ist, um Information über mindestens eins von der Ausgangsspannung und dem Ausgangsstrom für die Primärseitenschaltungsanordnung bereitzustellen. Die Koppelkomponente kann einen Optokoppler aufweisen.

Es besteht ein Bedarf an Vorrichtungen und Verfahren, die eine Übertragung von Information, wie beispielsweise Status-, Helligkeits-, Farb- oder auch Betriebszustandsinformationen, über eine Potentialbarriere eines Betriebsgeräts für ein Leuchtmittel erlauben. Es besteht insbesondere ein Bedarf an derartigen Vorrichtungen und Verfahren, mit denen Informationen in einfacher Weise über die Potentialbarriere übertragen werden können.

Gemäß der vorliegenden Erfindung werden ein LED-Konverter nach Anspruch 1, ein System nach Anspruch 5 und ein Verfahren zum Steuern einer getakteten Wandlerschaltung eines LED-Konverters nach Anspruch 9 bereitgestellt. Die abhängigen Ansprüche definieren Ausführungsform der Erfindung.

Da die Übertragung der Information durch Modulation der Schaltfrequenz des steuerbaren Schaltmittels der Wandlerschaltung erfolgt, ist es nicht erforderlich, einen separaten Optokoppler zur Übertragung der Information vorzusehen. Eine Steuereinrichtung für das steuerbare Schaltmittel auf der Primärseite der Wandlerschaltung kann in einfacher Weise die Modulation vornehmen, beispielsweise durch einen so genannten Frequenz-Sweep, bei dem die Schaltfrequenz gemäß einer Frequenzrampe verändert wird.

Die Erfindung wird nachfolgend unter Bezugnahme auf die beigefügte Zeichnung anhand bevorzugter Ausführungsbeispiele näher erläutert.
Figur 1 zeigt ein Blockschaubild eines Systems mit einem LED-Konverter nach einem Ausführungsbeispiel.
Figur 2 zeigt eine Veränderung einer Schaltfrequenz in wenigstens einer Frequenzrampe zum Übertragen von Information bei einem LED-Konverter nach einem Ausführungsbeispiel.
Figur 3 zeigt eine Veränderung einer Schaltfrequenz in wenigstens einer Frequenzrampe zum Übertragen von Information bei einem LED-Konverter nach einem weiteren Ausführungsbeispiel.
Figur 4 zeigt eine Veränderung einer Schaltfrequenz in wenigstens einer Frequenzrampe zum Übertragen von Information bei einem LED-Konverter nach einem weiteren Ausführungsbeispiel.
Figur 5 zeigt ein Steuersignal zum Ansteuern eines steuerbaren Schaltmittels bei einem LED-Konverter nach einem Ausführungsbeispiel.
Figur 6 ist ein Flussdiagramm eines Verfahrens nach einem Ausführungsbeispiel.
Figur 7 ist ein Schaltbild eines LED-Konverters nach einem Ausführungsbeispiel.
Figur 8 zeigt Steuersignale zum Ansteuern eines ersten steuerbaren Schaltmittels und eines zweiten steuerbaren Schaltmittels einer Halbbrückenschaltung eines LED-Konverters nach einem Ausführungsbeispiel.

Die Erfindung wird nachfolgend anhand von Ausführungsbeispielen unter Bezugnahme auf die Figuren näher beschrieben, in denen identische Bezugszeichen identische oder korrespondierende Elemente repräsentieren. Die Merkmale verschiedener Ausführungsbeispiele können miteinander kombiniert werden, sofern dies in der Beschreibung nicht ausdrücklich ausgeschlossen wird. Auch wenn einige Ausführungsbeispiele im Kontext spezifischer Anwendungen, beispielsweise im Kontext von Betriebsgeräten für LED-Module, näher beschrieben werden, sind die Ausführungsbeispiele nicht auf diese Anwendungen beschränkt.

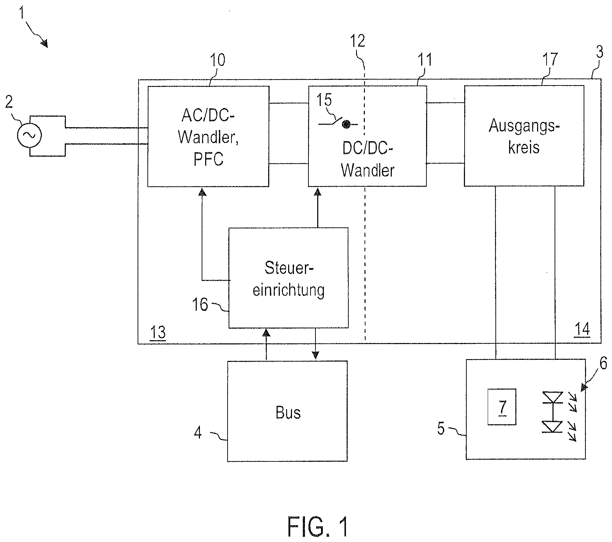

Figur 1 zeigt ein System 1, bei dem ein LED-Konverter 3 nach einem Ausführungsbeispiel ein Leuchtmittel 5 mit Energie versorgt. Das Leuchtmittel 5 kann eine Leuchtdiode (LED) oder mehrere LEDs umfassen. Die LEDs 6 können anorganische oder organische LEDs sein. Der LED-Konverter 3 kann optional mit einem Bus 4 oder einem Drahtloskommunikationssystem verbunden sein, um Dimmbefehle zu empfangen und/oder Statusmeldungen auszugeben.

Der LED-Konverter 3 ist im Betrieb eingangsseitig mit einer Versorgungsspannungsquelle 2, beispielsweise einer Netzspannung, gekoppelt. Der LED-Konverter 3 kann einen Gleichrichter 10 umfassen. Der LED-Konverter 3 kann optional eine Leistungsfaktorkorrekturschalung (PFC, "Power Factor Correction") umfassen. Der LED-Konverter 3 umfasst eine Wandlerschaltung 11. Die Wandlerschaltung 11 kann ein DC/DC-Wandler, wie beispielsweise eine Sperrwandlerschaltung, sein.

Die Wandlerschaltung 11 ist als getaktete Wandlerschaltung ausgestaltet und weist ein steuerbares Schaltmittel 15 auf. Das steuerbare Schaltmittel 15 kann ein Leistungsschalter sein. Das steuerbare Schaltmittel 15 kann ein Transistor mit isolierter Gateelektrode sein. Das steuerbare Schaltmittel 15 kann ein MOSFET sein. Wie noch ausführlich beschrieben wird, ist die Wandlerschaltung 11 eine primärseitig getaktete Wandlerschaltung, bei der eine Steuereinrichtung 16 das steuerbare Schaltmittel 15 getaktet schaltet. Während in Figur 1 schematisch nur ein steuerbares Schaltmittel 15 dargestellt ist, kann die Wandlerschaltung 11 auch mehrere primärseitige steuerbare Schaltmittel aufweisen, beispielsweise für eine Halbbrückenansteuerung der Wandlerschaltung 11.

Die Wandlerschaltung 11 kann eine galvanische Trennung aufweisen. Eine Primärseite der Wandlerschaltung 11 und eine Sekundärseite der Wandlerschaltung 11 können galvanisch getrennt sein. Dadurch kann eine Potentialtrennung zwischen unterschiedlichen Bereichen 13, 14 des LED-Konverters erzeugt werden. Die Ausgangsseite 14 mit der Sekundärseite der Wandlerschaltung kann als SELV ("Separated Extra Low Voltage")-Bereich ausgestaltet sein und kann durch eine SELV-Barriere von der Eingangsseite 13 getrennt sein. Die Potentialbarriere 12 muss nicht notwendig eine SELV-Barriere sein, sondern kann auch eine andere Potentialbarriere, beispielsweise eine ELV-Barriere, sein.

Der LED-Konverter 3 kann optional einen Ausgangskreis 17 aufweisen, der mit einer Sekundärspule der Wandlerschaltung 11 gekoppelt ist. Der Ausgangskreis 17 kann einen Abwärtswandler umfassen. Alternativ kann der Ausgangskreis 17 auch weggelassen werden, beispielsweise wenn das LED-Modul einen Abwärtswandler umfasst.

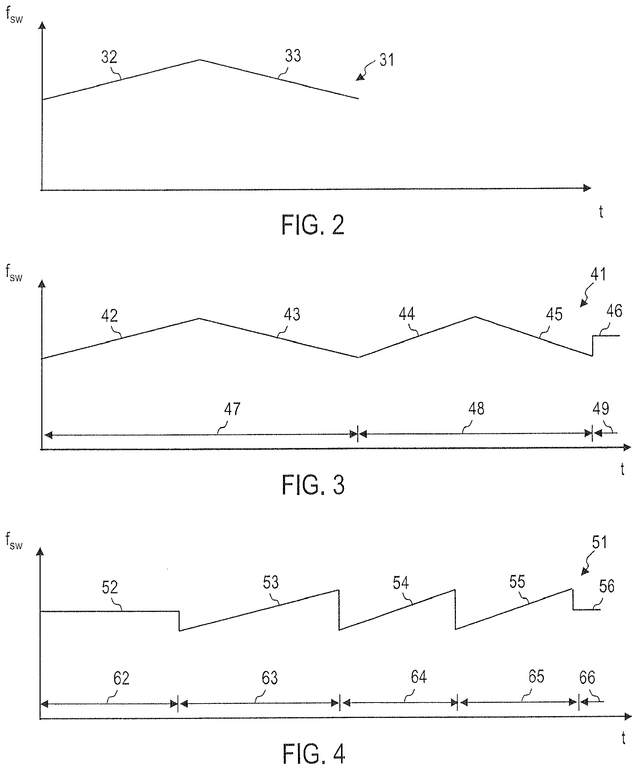

Der LED-Konverter 3 ist für eine Übertragung von Information, wie beispielsweise Status-, Helligkeits-, Farb- oder auch Betriesbzustandsinformationen, über die Potentialbarriere 12 ausgestaltet. Zum Übertragen von Information kann eine Steuereinrichtung 16 zum Steuern des steuerbaren Schaltmittels 15 eine Schaltfrequenz des steuerbaren Schaltmittels 15 modulieren. Wie unter Bezugnahme auf Figur 2 bis Figur 8 noch ausführlicher beschrieben wird, kann die Steuereinrichtung 16 die Schaltfrequenz in wenigstens einer Frequenzrampe verändern. Das Verändern der Schaltfrequenz in einer Frequenzrampe wird in der Technik auch als Frequenz-Sweep bezeichnet.

Ein Demodulator kann die Modulation der Schaltfrequenz erkennen. Dazu kann der Demodulator modulierte Signale, beispielsweise Wechselstrom (AC)-Signalanteile einer Spannung oder eines Stroms, an der Sekundärseite der Wandlerschaltung 11 überwachen, um die übertragene Information zu detektieren. Der Demodulator kann in einem SELV-Bereich des LED-Konverters 3 vorgesehen sein. Der Demodulator kann eine integrierte Halbleiterschaltung sein, die den Ausgangskreis 17 steuert.

Der Demodulator kann alternativ oder zusätzlich auch auf einem LED-Modul 5 oder in einem anderen Leuchtmittel vorgesehen sein. Beispielsweise kann das LED-Modul 5 eine integrierte Halbleiterschaltung 7 umfassen, die als Demodulator wirkt. Die integrierte Halbleiterschaltung 7 kann modulierte Signale, wie Wechselstrom (AC)-Signalanteile eines LED-Stroms, erkennen. Die integrierte Halbleiterschaltung 7 kann eingerichtet sein, um eine Frequenzänderung der AC-Signalanteile zu ermitteln und so die übertragene Information auslesen.

Der Demodulator kann eingerichtet sein, um abhängig von einem AC-Signalanteil einer Spannung oder eines Stroms im SELV-Bereich des LED-Konverters 3 oder im LED-Modul 5 eine Schaltfrequenz zu erkennen, mit der die primärseitige Steuereinrichtung 16 das primärseitige steuerbare Schaltmittel 15 getaktet schaltet. Der Demodulator kann eingerichtet sein, um abhängig von einem AC-Signalanteil einer Spannung oder eines Stroms im SELV-Bereich des LED-Konverters 3 oder im LED-Modul 5 zu erkennen, ob eine Schaltfrequenz des primärseitigen steuerbaren Schaltmittels 15 in wenigstens einer Frequenzrampe verändert wird. Der Demodulator kann eingerichtet sein, um abhängig von einem AC-Signalanteil einer Spannung oder eines Stroms im SELV-Bereich des LED-Konverters 3 oder im LED-Modul 5 zu erkennen, mit welcher Rate eine Schaltfrequenz des primärseitigen steuerbaren Schaltmittels 15 in wenigstens einer Frequenzrampe verändert wird. Der Demodulator kann eingerichtet sein, um abhängig von einem AC-Signalanteil einer Spannung oder eines Stroms im SELV-Bereich des LED-Konverters 3 oder im LED-Modul 5 zu erkennen, ob eine Schaltfrequenz des primärseitigen steuerbaren Schaltmittels 15 in wenigstens einer Frequenzrampe erhöht oder verringert wird.

Die übertragene Information kann ein analoger Wert sein und/oder kann eine folge von Datenbits umfassen. Die übertragene Information kann einen Steuerbefehl oder Daten umfassen, die in dem SELV-Bereich 14 des LED-Konverters 3 oder in dem LED-Modul 5 zur Ausführung eines Steuer- oder Regelfunktion verwendet werden. Beispielsweise kann eine Steuerung oder Regelung wenigstens eines weiteren Wandlers, z.B. eines Abwärtswandlers, abhängig von der übertragenen Information vorgenommen werden.

Die Übertragung der Information kann unidirektional von der Primärseite der Wandlerschaltung 11 zur Sekundärseite der Wandlerschaltung 11 erfolgen. Die Übertragung der Information kann auch bidirektional erfolgen, beispielsweise um wenigstens einen Sensorwert von der Sekundärseite der Wandlerschaltung 11 zur Steuereinrichtung 16 zu übertragen. Dazu kann an der Sekundärseite der Wandlerschaltung wenigstens ein weiteres steuerbares Schaltmittel vorgesehen sein.

Da die Information durch Modulation der Schaltfrequenz des steuerbaren Schaltmittels 15 über die Potentialbarriere 12 übertragen wird, werden dieselben Komponenten zur Übertragung von Energie zur Ausgangsseite und zum Übertragen von Information zur Ausgangsseite verwendet. Eine integrierte Schaltung, die als Demodulator zum Detektieren der Modulation der Schaltfrequenz auf der Ausgangsseite 14 des LED-Konverters 3 oder in dem LED-Modul 5 verwendet werden kann, kann gleichzeitig weitere Aufgaben erfüllen. Beispielsweise kann die integrierte Schaltung, die als Demodulator verwendet wird, auch die Steuerung oder Regelung eines Abwärtswandlers, eines Sperrwandlers oder eines anderen Wandlers, der mit der Sekundärseite der Wandlerschaltung 11 gekoppelt ist, vornehmen.

Die Modulation der Schaltfrequenz des steuerbaren Schaltmittels 15, das von der Steuereinrichtung 16 gesteuert wird, kann auf unterschiedliche Weise erfolgen. Die Steuereinrichtung 16 kann eine Frequenzrampe, in der die Schaltfrequenz verändert wird, abhängig von einem Sollwert eines Ausgangsstroms des LED-Konverters festlegen. Die Steuereinrichtung 16 kann die Frequenzrampe, in der die Schaltfrequenz verändert wird, abhängig von einem Dimmlevel festlegen. Die Steuereinrichtung 16 kann die Frequenzrampe so festlegen, dass ein über die Frequenzrampe zeitlich gemittelter Ausgangsstrom des LED-Konverters 3 denselben Wert aufweist wie der Mittelwert des Ausgangsstroms in einem weiteren Zeitintervall, in dem die Steuereinrichtung 16 die Schaltfrequenz nicht in einer Frequenzrampe verändert. Um die Eigenschaften der Frequenzrampe so einzustellen, dass der zeitliche Mittelwert des Ausgangsstroms einen gewünschten Wert aufweist, kann die Steuereinrichtung 16 verschiedene Parameter der Frequenzrampe beeinflussen. Beispielsweise kann die Steuereinrichtung 16 eine Anfangsfrequenz und/oder eine Endfrequenz und/oder eine Änderungsrate der Schaltfrequenz während der Frequenzrampe und/oder eine Dauer der Frequenzrampe einstellen. Die Steuereinrichtung 16 kann wenigstens einen Parameter der Frequenzrampe kennfeldbasiert und/oder rechnerisch ermitteln.

Die Steuereinrichtung 16 kann eingerichtet sein, um die Änderung der Schaltfrequenz in wenigstens einer Frequenzrampe abhängig von der zu übertragenden Information vorzunehmen. Beispielsweise kann die Steuereinrichtung 16 abhängig davon, welche Information zu übertragen ist, eine Steigung, eine Dauer, eine Amplitude oder eine Richtung wenigstens einer Frequenzrampe festlegen. Die Steuereinrichtung 16 kann eingerichtet sein, um eine Information, die einen analogen Wert repräsentiert, in einer Steigung wenigstens einer Frequenzrampe zu kodieren. Die Steuereinrichtung 16 kann eingerichtet sein, um zum Übertragen einer Folge von Datenbits für jedes Datenbit selektiv abhängig von dem Wert des Datenbits die Schaltfrequenz in wenigstens einer Frequenzrampe zu verändern. Unterschiedliche Werte eines Datenbits können beispielsweise in unterschiedlichen Steigungen einer Frequenzrampe, unterschiedlichen Dauern einer Frequenzrampe, unterschiedlichen Richtungen der Frequenzrampe, unterschiedlichen Abfolgen von Frequenzrampen oder mit anderen Modulationskodierungen kodiert werden.

Figur 2 bis Figur 4 veranschaulichen beispielhaft die Veränderung einer Schaltfrequenz des steuerbaren Schaltmittels 15, wie sie bei LED-Konvertern und Verfahren nach Ausführungsbeispielen verwendet werden kann. Die entsprechende Veränderung der Schaltfrequenz kann durch die Steuereinrichtung 16 vorgenommen werden. Die Steuereinrichtung 16 kann ein primärseitiges steuerbares Schaltmittel getaktet schalten. Ein Zeitabstand zwischen aufeinanderfolgenden Schaltvorgängen oder zwischen aufeinanderfolgenden Schaltzyklen, beispielsweise ein Zeitabstand zwischen Einschaltvorgängen, kann abhängig von der jeweiligen Schaltfrequenz f_{sw} zeitabhängig ermittelt werden.

Figur 2 veranschaulicht eine Schaltfrequenz 31, die als Funktion der Zeit verändert wird. Die Schaltfrequenz 31 kann in einer Frequenzrampe 32 und einen anschließenden weiteren Frequenzrampe 33 verändert werden. Die Frequenzrampe 32 kann eine ansteigende Frequenzrampe sein. Die weitere Frequenzrampe 33 kann eine abfallende Frequenzrampe sein. Die Steuereinrichtung 16 kann eingerichtet sein, um in einem ersten Frequenz-Sweep die Schaltfrequenz in der Frequenzrampe 32 zu erhöhen und in einem zweiten Frequenz-Sweep die Schaltfrequenz in der weiteren Frequenzrampe 33 wieder zu verringern. Die Folge von zwei Frequenzrampen 32, 33 oder von mehr als zwei Frequenzrampen kann zur Datenübertragung verwendet werden.

Alternativ zur Frequenzrampe 33 kann auch eine Rechteckfunktion verwendet werden.

Ein analoger Wert kann in einer Steigung der Frequenzrampen 32, 33, d.h. einer Änderungsrate der Schaltfrequenz, kodiert und über die galvanische Trennung der Wandlerschaltung übertragen werden.

Ein digitaler Wert kann in der Steigung der Frequenzrampen, einer positiven oder negativen Steigung aufeinanderfolgender Frequenzrampen, etc. kodiert sein. Beispielsweise kann die Steuereinrichtung 16 die Schaltfrequenz in wenigstens einer ersten Frequenzrampe verändern, um ein Datenbit mit einem logischen Wert '0' zu übertragen. Die Steuereinrichtung 16 kann die Schaltfrequenz in wenigstens einer zweiten Frequenzrampe verändern, um ein Datenbit mit einem logischen Wert '1' zu übertragen. Die Steuereinrichtung 16 kann die Schaltfrequenz konstant halten oder in wenigstens einer dritten Frequenzrampe verändern, wenn keine Information übertragen wird.

Die Frequenzrampen 32, 33 werden von der Steuereinrichtung 16 abhängig von der zu übertragenden Information festgelegt. Die Frequenzrampen 32, 33 können von der Steuereinrichtung 16 so festgelegt werden, dass ein Mittelwert des Ausgangsstroms des LED-Konverters, gemittelt über die Zeit, in der die Information übertragen wird, gleich dem Mittelwert des Ausgangsstroms des LED-Konverters in einem Zeitintervall ist, in dem keine Information übertragen wird.

Figur 3 veranschaulicht beispielhaft die sequentielle Übertragung von Information in einer Folge von zwei Datenbits durch Modulation einer Schaltfrequenz 41.

In einem ersten Zeitintervall 47 wird ein erstes Datenbit mit einem ersten logischen Wert übertragen. Die Schaltfrequenz wird in wenigstens einer Frequenzrampe 42, 43 verändert.

In einem zweiten Zeitintervall 48 wird ein zweites Datenbit mit einem zweiten logischen Wert übertragen. Die Schaltfrequenz wird in wenigstens einer weiteren Frequenzrampe 44, 45 verändert. Die wenigstens eine zweite Frequenzrampe 44, 45 unterscheidet sich von der wenigstens einen Frequenzrampe 42, 43. Die Steigung der wenigstens einen weiteren Frequenzrampe 44, 45 kann von der Steigung der wenigstens einen Frequenzrampe 42, 43 verschieden sein, um anzuzeigen, dass ein Datenbit mit einem anderen logischen Wert übertragen wird.

In einem dritten Zeitintervall 49 wird keine Information übertragen. Die Schaltfrequenz kann einen konstanten Wert 46 aufweisen oder kann in einer noch weiteren Frequenzrampe verändert werden, die von den Frequenzrampen 42-45 verschieden ist.

Die Frequenzrampen 42, 43 können so definiert sein, dass ein Mittelwert des Ausgangsstroms während der Übertragung des ersten Datenbits, gemittelt über das erste Zeitintervall 47, gleich dem Ausgangsstrom ist, der vorliegt, wenn keine Information übertragen wird. Die weiteren Frequenzrampen 44, 45 können so definiert sein, dass ein Mittelwert des Ausgangsstroms während der Übertragung des zweiten Datenbits, gemittelt über das zweite Zeitintervall 48, gleich dem Ausgangsstrom ist, der vorliegt, wenn keine Information übertragen wird.

Ein Datenbit oder ein analoger Wert kann nicht nur in zwei oder mehr als zwei Frequenzrampen übertragen werden, sondern auch in nur einer Frequenzrampe, wie in Figur 4 dargestellt.

Figur 4 veranschaulicht beispielhaft die sequentielle Übertragung von Information in einer Folge von drei Datenbits durch Modulation einer Schaltfrequenz 51. In einem ersten Zeitintervall 62 wird keine Information übertragen. Die Schaltfrequenz kann auf einem konstanten Wert 52 gehalten werden. In einem zweiten Zeitintervall 63 wird ein Datenbit mit einem ersten logischen Wert übertragen. Die Schaltfrequenz wird in einer Frequenzrampe 53 verändert, die eine erste Steigung aufweist. In einem dritten Zeitintervall 64 wird ein Datenbit mit einem zweiten logischen Wert übertragen, der von dem ersten logischen Wert verschieden ist. Die Schaltfrequenz wird in einer Frequenzrampe 54 verändert, die eine zweite Steigung aufweist, die von der ersten Steigung verschieden ist. In einem vierten Zeitintervall 65 wird ein Datenbit mit dem zweiten logischen Wert übertragen. Die Schaltfrequenz wird in einer Frequenzrampe 55 verändert, die die zweite Steigung aufweist. In einem fünften Zeitintervall 66 wird keine Information übertragen. Die Schaltfrequenz kann auf einem konstanten Wert 56 gehalten werden.

Die Frequenzrampen 53-55 können jeweils so festgelegt sein, dass ein Mittelwert des Ausgangsstroms, gemittelt über die entsprechende Frequenzrampe, einem vorgegebenen Sollwert entspricht. Der Wert des Ausgangsstroms kann demjenigen Ausgangsstrom entsprechen, den der LED-Konverter bereitstellt, wenn in den Zeitintervallen 62, 66 keine Information übertragen wird.

Die Modulation der Schaltfrequenz kann sekundärseitig, beispielsweise auf einer Ausgangsseite des LED-Konverters oder in einem LED-Modul, detektiert werden. Abhängig von der übertragenen Information kann eine Steuerfunktion oder Regelfunktion auf der Ausgangsseite des LED-Konverters oder in dem LED-Modul ausgeführt werden.

Während die Information in unterschiedlichen Steigungen von Frequenzrampen kodiert sein kann, kann eine Vielzahl anderer Kodierungen verwendet werden.

Beispielsweise kann die Richtung der Frequenzrampe, d.h. eine steigende oder fallende Frequenzrampe, zur Kodierung der Information verwendet werden. Es kann wenigstens eine Anfangsfrequenz und/oder eine Endfrequenz und/oder eine Dauer der Frequenzrampe zur Kodierung der Information verwendet werden.

Während die Schaltfrequenz konstant gehalten werden kann, wenn keine Information übertragen werden soll, kann in einem Zeitintervall, in dem keine Information übertragen wird, die Schaltfrequenz moduliert werden, um das EMV-Verhalten des Betriebsgerätes zu verbessern. Beispielsweise kann die Schaltfrequenz in einer Folge von Frequenzrampen verändert werden, wenn keine Information übertragen wird. Diese Folge von Frequenzrampen kann sich von den Frequenzrampen, in denen Informationen übertragen werden, unterscheiden. Die Modulation der Schaltfrequenz kann verändert werden, um Information zu übertragen.

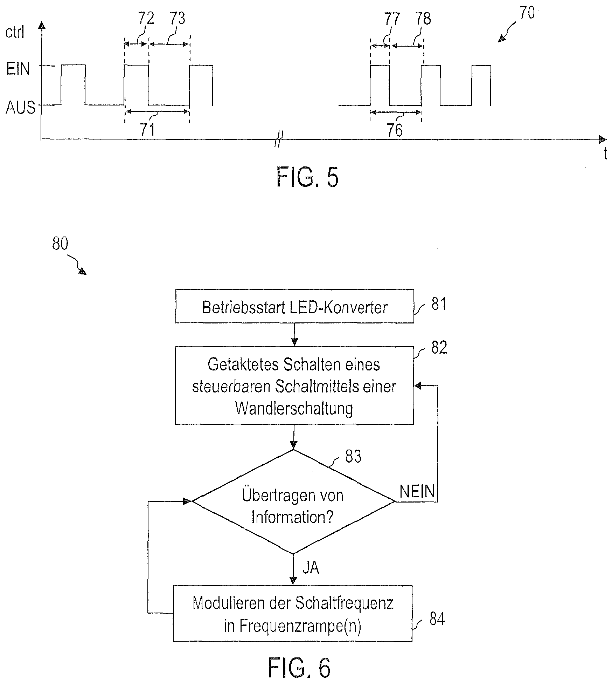

Figur 5 veranschaulicht ein Steuersignal 70, das die Steuereinrichtung 16 eines LED-Konverters 3 nach einem Ausführungsbeispiel erzeugt. Während die Schaltfrequenz in einer Frequenzrampe verändert wird, wird das steuerbare Schaltmittel 15 der Wandlerschaltung mehrfach getaktet geschaltet. Die Steuereinrichtung 16 kann eingerichtet sein, um einen Zeitabstand 71, 76 zwischen aufeinanderfolgenden Einschaltvorgängen oder zwischen aufeinanderfolgenden Ausschaltvorgängen jeweils abhängig davon bestimmen, welchen Wert die Schaltfrequenz zum entsprechenden Zeitpunkt aufweisen soll. Der Zeitabstand 71, 76 zwischen aufeinanderfolgenden Einschaltvorgängen oder zwischen aufeinanderfolgenden Ausschaltvorgängen ist das Inverse der Schaltfrequenz, die in der Frequenzrampe verändert wird. Zum Verändern der Schaltfrequenz in einer Frequenzrampe, in der die Schaltfrequenz erhöht wird, kann die Steuereinrichtung den Zeitabstand 76 zwischen aufeinanderfolgenden Einschaltvorgängen oder zwischen aufeinanderfolgenden Ausschaltvorgängen zu einem späteren Zeitpunkt auf einen kürzeren Wert einstellen als den Zeitabstand 71 zwischen aufeinanderfolgenden Einschaltvorgängen oder zwischen aufeinanderfolgenden Ausschaltvorgängen zu einem früheren Zeitpunkt in derselben Frequenzrampe.

Die Steuereinrichtung 16 kann eine Ein-Zeit 72, 77, für die das steuerbare Schaltmittel jeweils eingeschaltet wird, und/oder eine Aus-Zeit 73, 78, für die das steuerbare Schaltmittel jeweils ausgeschaltet wird, zeitabhängig ändern, um die Schaltfrequenz zu modulieren. Die Steuereinrichtung 16 kann während eines Frequenz-Sweeps, bei dem die Schaltfrequenz in einer Frequenzrampe mit positiver Steigung erhöht wird, die Ein-Zeit 72, 77 verkürzen. Die Steuereinrichtung 16 kann während eines Frequenz-Sweeps, bei dem die Schaltfrequenz in einer Frequenzrampe mit positiver Steigung erhöht wird, die Aus-Zeit 73, 78 verkürzen.

Die Veränderung des Zeitabstands 71, 76 zwischen aufeinanderfolgenden Schaltzyklen, die Veränderung der Ein-Zeit 72, 77 und/oder die Veränderung der Aus-Zeit 73, 78 als Funktion der Zeit kann von der Steuereinrichtung 16 kennfeldbasiert oder rechnerisch ermittelt werden. Abhängig davon, welche Information zu übertragen ist, können unterschiedliche Kennfelder oder Prozeduren zur rechnerischen Bestimmung des Zeitabstands 71, 76 zwischen Schaltzyklen, der Ein-Zeit 72, 77 und/oder der Aus-Zeit 73, 78 verwendet werden.

Bei Ausführungsbeispielen kann die Steuereinrichtung 16 eingerichtet sein, um abhängig von der zu übertragenden Information zu bestimmen, wie sich die Schaltfrequenz, der Zeitabstand 71, 76 zwischen aufeinanderfolgenden Schaltzyklen, die Ein-Zeit 72, 77 und/oder die Aus-Zeit 73, 78 gegenüber demjenigen Wert verändern soll, der eingestellt wird, wenn keine Information übertragen wird. Ein Kennfeld oder eine Prozedur zur rechnerischen Bestimmung kann die Veränderung der Schaltfrequenz, des Zeitabstands 71, 76 zwischen aufeinanderfolgenden Schaltzyklen, der Ein-Zeit 72, 77 und/oder der Aus-Zeit 73, 78 gegenüber demjenigen Wert definieren, der eingestellt wird, wenn keine Information übertragen wird. Dies erleichtert die Verwendung der Informationsübertragung durch Modulation der Schaltfrequenz in Kombination mit einer Regelschleife, die die Schaltfrequenz als Stellgröße verwendet. Die Schaltfrequenz in dem Zustand, in dem keine Information übertragen wird, kann beispielsweise von der Regelschleife als Stellgröße eingestellt werden, die einen Ausgangsstrom des LED-Konverters regelt. Kennfeldbasiert oder durch rechnerische Prozeduren kann die Steuereinrichtung 16 ermitteln, wie zum Übertragen der Information die Schaltfrequenz gegenüber dem von der Regelschleife eingestellten Wert verändert werden soll.

Figur 6 ist ein Flussdiagramm eines Verfahrens 80 nach einem Ausführungsbeispiel. Das Verfahren kann mit einem LED-Konverter oder einem System nach einem Ausführungsbeispiel automatisch ausgeführt werden.

Bei Schritt 81 erfolgt ein Betriebsstart des LED-Konverters.

Bei Schritt 82 kann ein steuerbares Schaltmittel einer Wandlerschaltung getaktete geschaltet werden. Das steuerbare Schaltmittel kann auf einer Primärseite der Wandlerschaltung angeordnet sein. Das steuerbare Schaltmittel kann von einer Steuereinrichtung so getaktet geschaltet werden, dass ein Ausgangsstrom des LED-Konverters auf einen Sollwert eingestellt wird.

Bei Schritt 83 kann überprüft werden, ob Information über eine Potentialbarriere übertragen werden soll. Falls keine Information übertragen werden soll, kann das Verfahren bei Schritt 82 fortgesetzt werden. Falls Information übertragen werden soll, wird das Verfahren bei Schritt 84 fortgesetzt werden.

Bei Schritt 84 wird die Schaltfrequenz des steuerbaren Schaltmittels abhängig von der zu übertragenden Information moduliert. Die Schaltfrequenz kann in wenigstens einer Frequenzrampe verändert werden, um einen analogen Wert oder wenigstens ein Datenbit zu übertragen. Die Modulation der Schaltfrequenz kann derart erfolgen, dass ein zeitlicher Mittelwert des Ausgangsstroms des LED-Konverters im Vergleich zu dem Zustand, in dem keine Information übertragen wird, unverändert bleibt. Nach dem Übertragen der Information kann das Verfahren zu Schritt 83 zurückkehren.

Die Modulation der Schaltfrequenz des primärseitigen steuerbaren Schaltmittels kann abhängig von einem modulierten Signals, beispielsweise ein AC-Signalanteil eines Stroms oder einer Spannung, auf der Ausgangsseite des LED-Konverters oder auf einem LED-Modul erfasst werden. Ein Demodulator kann eine Spannung oder einen Strom überwachen, um die Modulation der Schaltfrequenz des primärseitigen steuerbaren Schaltmittels zu erkennen. Der Demodulator kann einen LED-Strom überwachen. Der Demodulator kann eine Spannung an einer Sekundärspule der Wandlerschaltung überwachen. Der Demodulator kann einen Spulenstrom der Sekundärspule der Wandlerschaltung überwachen. Das Verfahren kann das Ausführen wenigstens einer Steuer- oder Regelfunktion abhängig von der übertragenen Information umfassen.

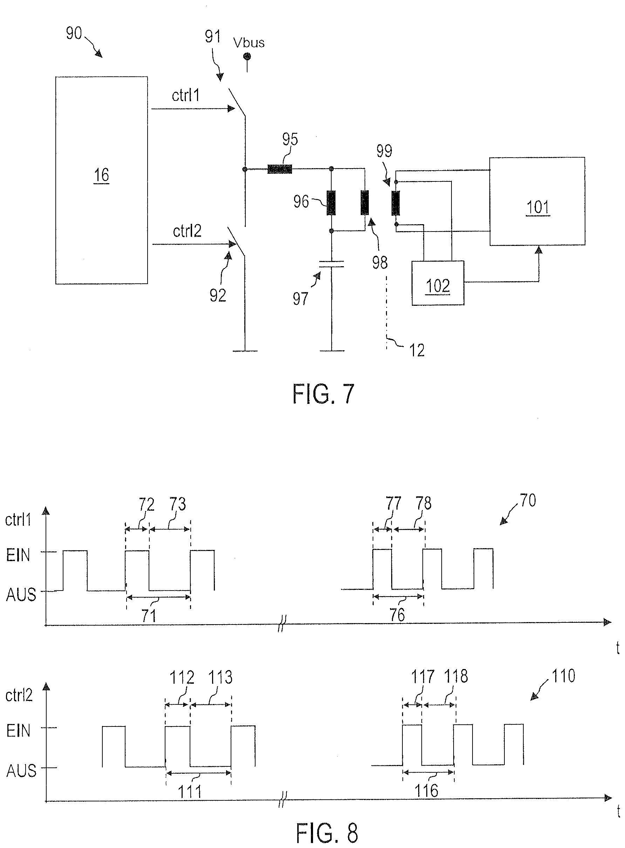

Die Modulation der Schaltfrequenz zur Informationsübertragung kann bei getakteten Wandlerschaltung verwendet werden. Es kann nicht nur die Schaltfrequenz eines steuerbaren Schaltmittels, sondern auch die Schaltfrequenz von wenigstens zwei steuerbaren Schaltmitteln moduliert werden, wie anhand von Figur 7 und Figur 8 näher beschrieben wird.

Figur 7 zeigt ein Ausführungsbeispiel eines LED-Konverters mit einer Wandlerschaltung 90, die als LLC-Resonanzwandler mit Halbbrückenansteuerung ausgestaltet ist.

Die Wandlerschaltung 90 umfasst eine Primärseite und eine Sekundärseite. Es liegt Potentialtrennung zwischen der Primärseite und der Sekundärseite vor. Zur Trennung kann ein Transformator mit einer Primärspule 98 und einer Sekundärspule 99 vorgesehen sein. Die Wandlerschaltung 90 kann bei dem LED-Konverter 3 oder bei einem anderen Betriebsgerät zum Betreiben von LEDs verwendet werden. Die Wandlerschaltung 90 wirkt als DC/DC-Wandler. Die Sekundärseite kann ein SELV-Bereich sein, der durch eine SELV-Barriere 12 vom primärseitigen Bereich getrennt ist.

Die Primärseite umfasst einen LLC-Resonanzkreis, der als Serienresonanzkreis ausgestaltet ist. Der LLC-Resonanzkreis weist eine erste Induktivität 95, eine zweite Induktivität 96 und eine Kapazität 97 in einer Serienschaltung auf. Wenigstens eine der Induktivitäten 95, 96 kann eine parasitäre Induktivität sein oder kann durch die Induktivität der Primärspule 98 des Transformators realisiert werden. Gemäß der allgemeinen Terminologie in diesem technischen Gebiet wird der Begriff "LLC-Resonanzkreis" bzw. "LLC-Resonanzwandler" so verwendet, dass damit ein Resonanzkreis mit zwei Induktivitäten und einer Kapazität bzw. eine entsprechender Wandlerschaltung bezeichnet wird, wobei es nicht darauf ankommt, ob die Induktivität 96 zwischen die Induktivität 95 und den Kondensator 97 geschaltet ist oder der Kondensator 97 zwischen die induktiven Elemente 95 und 96 geschaltet ist. Die zweite Induktivität 96 ist symbolisch dargestellt und kann die Induktivität der Primärspule 98 des Transformators sein. Alternativ oder zusätzlich kann auch die erste Induktivität 95 als Streuinduktivität in den Transformator integriert sein. Die zweite Induktivität 96 kann die Haupt-Induktivität des Resonanzkreises sein, deren Induktivität größer als die der ersten Induktivität 95 ist. Andere Ausgestaltungen des LLC-Resonanzkreises sind möglich. Beispielsweise kann die Kapazität 97 zwischen die Induktivitäten 95 und 96 geschaltet sein.

Die primärseitige Schaltung umfasst eine Halbbrücke mit einem ersten Schaltmittel 91, das ein Leistungsschalter sein kann, und einem zweiten Schaltmittel 92, das ein Leistungsschalter sein kann. Das erste Schaltmittel 91 und das zweite Schaltmittel 92 können identisch sein. Die Halbbrücke kann als symmetrische Halbbrücke ausgebildet sein. Die Schaltmittel können als Feldeffekttransistoren, beispielsweise als MOSFETs ausgebildet sein. Der Resonanzkreis ist mit einem Knoten zwischen dem ersten Schaltmittel 91 und dem zweiten Schaltmittel 92 verbunden. Der Resonanzkreis ist mit der Mitte der Halbbrücke zwischen den zwei Schaltmitteln 91 und 92 verbunden. Ein erster Anschluss der ersten Induktivität 95 des Resonanzkreises kann mit dem Knoten zwischen dem ersten Schaltmittel 91 und dem zweiten Schaltmittel 92 der Halbbrückenschaltung verbunden sein. Ein zweiter Anschluss der ersten Induktivität 95 kann mit einem ersten Anschluss der zweiten Induktivität 96 des Resonanzkreises verbunden sein. Ein zweiter Anschluss der zweiten Induktivität 96 des Resonanzkreises kann mit einem ersten Anschluss der Kapazität 97 verbunden sein. Ein Shunt-Widerstand kann zwischen das zweite Schaltmittel 92 und ein Referenzpotential, beispielsweise Masse, geschaltet sein, um beispielsweise Abschaltzeiten im Fall einer Fehlerabschaltung kurz zu halten.

Im Betrieb der Wandlerschaltung 90 steuert die Steuereinrichtung 16 das erste Schaltmittel 91 und das zweite Schaltmittel 92. Dabei kann jedes der Schaltmittel jeweils mit derselben Schaltfrequenz geschaltet werden. Die Steuereinrichtung 16 kann das erste Schaltmittel 91 und das zweite Schaltmittel 92 so steuern, dass immer maximal eines der beiden Schaltmittel leitend geschaltet ist.

Zum Übertragen von Information, wie beispielsweise Status-, Helligkeits-, Farb- oder auch Betriesbzustandsinformationen, kann die Steuereinrichtung 16 die Schaltfrequenz, mit der das erste Schaltmittel 91 und das zweite Schaltmittel 92 getaktet geschaltet werden, modulieren. Dabei kann die Schaltfrequenz des ersten Schaltmittels 91 und die Schaltfrequenz des zweiten Schaltmittels 92 in wenigstens einer Frequenzrampe verändert oder anderweitig moduliert werden. Die Modulation der Schaltfrequenz kann abhängig von der zu übertragenden Information erfolgen.

Auf einer Ausgangsseite des LED-Konverters, beispielsweise in einem SELV-Bereich, kann ein Demodulator 102 vorgesehen sein. Der Demodulator 102 kann eine Spannung an der Sekundärspule 99 oder einen Spulenstrom der Sekundärspule 99 des Transformators auswerten, um zu erkennen, ob die Schaltfrequenz der steuerbaren Schaltmittel 91, 92 moduliert wird. Der Demodulator 102 kann überwachen, in welcher Weise sich eine Frequenz der Spulenspannung der Sekundärspule 99 verändert. Der Demodulator 102 kann eingerichtet sein, um eine Modulation der Schaltfrequenz der steuerbaren Schaltmittel 91, 92 zu erkennen.

Der Demodulator 102 kann eine integrierte Halbleiterschaltung sein, die weitere Steuer- oder Regelfunktionen ausführt. Der Demodulator 102 kann eingerichtet sein, um einen weiteren Wandler 101 abhängig von der Information, die über die Potentialbarriere übertragen wurde, zu steuern oder zu regeln.

Figur 8 zeigt ein erstes Steuersignal 70, das von der Steuereinrichtung 16 zum Ansteuern eines ersten Schaltmittels 91 einer Halbbrücke erzeugt werden kann, und ein zweites Steuersignal 110, das von der Steuereinrichtung 16 zum Ansteuern eines zweiten Schaltmittels 92 der Halbbrücke erzeugt werden kann. Die Steuereinrichtung 16 kann so eingerichtet sein, dass jeweils maximal nur eines der steuerbaren Schaltmittel 91, 92 der Halbbrücke leitend geschaltet ist.

Um sowohl eine Schaltfrequenz des ersten Schaltmittels 91 als auch eine Schaltfrequenz des zweiten Schaltmittels 92 zu modulieren, kann die Steuereinrichtung 16 einen Zeitabstand 71, 76, 111, 116 zwischen aufeinanderfolgenden Einschaltvorgängen oder zwischen aufeinanderfolgenden Ausschaltvorgängen jeweils abhängig davon bestimmen, ob Information übertragen werden soll und welche Information übertragen werden soll. Der Zeitabstand 71, 76, 111, 116 zwischen aufeinanderfolgenden Einschaltvorgängen oder zwischen aufeinanderfolgenden Ausschaltvorgängen kann von der Steuereinrichtung 16 automatisch abhängig von der zu übertragenden Information als Funktion der Zeit verändert werden, um die Schaltfrequenz zu modulieren.

Um sowohl eine Schaltfrequenz des ersten Schaltmittels 91 als auch eine Schaltfrequenz des zweiten Schaltmittels 92 zu modulieren, kann die Steuereinrichtung 16 eine Ein-Zeit 72, 77, für die das erste Schaltmittel 91 jeweils eingeschaltet wird, und eine Ein-Zeit 112, 117, für die das zweite Schaltmittel jeweils eingeschaltet wird, abhängig davon bestimmen, ob Information übertragen werden soll und welche Information übertragen werden soll. Die Ein-Zeit 72, 77, für die das erste Schaltmittel 91 jeweils eingeschaltet wird, und die Ein-Zeit 112, 117, für die das zweite Schaltmittel jeweils eingeschaltet wird, kann von der Steuereinrichtung 16 automatisch abhängig von der zu übertragenden Information zeitabhängig verändert werden, um die Schaltfrequenz zu modulieren.

Alternativ oder zusätzlich kann die Steuereinrichtung 16 eine Aus-Zeit 73, 78, für die das erste Schaltmittel 91 jeweils ausgeschaltet wird, und eine Aus-Zeit 113, 118, für die das zweite Schaltmittel jeweils ausgeschaltet wird, abhängig davon bestimmen, ob Information übertragen werden soll und welche Information übertragen werden soll. Die Aus-Zeit 73, 78, für die das erste Schaltmittel 91 jeweils ausgeschaltet wird, und die Aus-Zeit 113, 118, für die das zweite Schaltmittel jeweils ausgeschaltet wird, kann von der Steuereinrichtung 16 automatisch abhängig von der zu übertragenden Information zeitabhängig verändert werden, um die Schaltfrequenz zu modulieren.

Während Ausführungsbeispiele unter Bezugnahme auf die Figuren beschrieben wurden, können Abwandlungen bei weiteren Ausführungsbeispielen realisiert werden. Während die Modulation der Schaltfrequenz dadurch erfolgen kann, dass die Schaltfrequenz in wenigstens einer Frequenzrampe verändert wird, können auch andere Modulationstechniken zum Modulieren der Schaltfrequenz eingesetzt werden. Bei Veränderung der Schaltfrequenz in wenigstens einer Frequenzrampe kann die wenigstens eine Frequenzrampe eine lineare oder eine nicht-lineare Frequenzrampe sein.

Eine Demodulation der übertragenen Information kann nicht nur auf einer Sekundärseite des LED-Konverters, sondern auch in einem LED-Modul oder einem anderen Leuchtmittel, das wenigstens eine Leuchtdiode umfasst, erfolgen.

Die Steuereinrichtung der LED-Konverter nach Ausführungsbeispielen kann als integrierte Halbleiterschaltung ausgestaltet sein. Die Steuereinrichtung kann als anwendungsspezifische Spezialschaltung (ASIC, "Application Specific Integrated Circuit"), als Controller, als Mikrocontroller, als Prozessor, als Mikroprozessor oder als anderer Chip ausgestaltet sein.

Induktivitäten und Kapazitäten der Wandlerschaltung können jeweils durch entsprechende induktive bzw. kapazitive Elemente, beispielsweise als Spulen bzw. Kondensatoren, gebildet werden. Es ist jedoch auch möglich, dass Induktivitäten, beispielsweise eine Induktivität eines LLC-Resonanzkreises oder beide Induktivitäten des LLC-Resonanzkreises eines LLC-Resonanzwandlers, als Streuinduktivität ausgebildet sind.

LED-Konverter, Verfahren und Systeme nach Ausführungsbeispielen können zur Übertragung von Information über eine SELV-Barriere eingesetzt werden, ohne darauf beschränkt zu sein.

## Patentansprüche

1. LED-Konverter (3), umfassend
eine getaktete Wandlerschaltung (11; 90), aufweisend eine Potentialbarriere (12) zwischen einer Eingangsseite (13) und einer Ausgangsseite (14) des LED-Konverters (3), wobei die getaktete Wandlerschaltung (11; 90) wenigstens ein primärseitiges steuerbares Schaltmittel (15; 91, 92) und eine Steuereinrichtung (16) zum getakteten Schalten des wenigstens einen primärseitigen steuerbaren Schaltmittels (15; 91, 92) umfasst,
wobei die Steuereinrichtung (16) eingerichtet ist, zum getakteten Schalten des wenigstens einen primärseitigen steuerbaren Schaltmittels (15; 91, 92) eine Schaltfrequenz (31; 41; 51) zur Regelung eines vorgegebenen Ausgangsstroms des LED-Konverters konstant über mindestens ein erstes Zeitintervall einzustellen,
**dadurch gekennzeichnet, dass**
die Steuereinrichtung (16) eingerichtet ist, die Schaltfrequenz (31; 41; 51) in wenigstens einem zweiten Zeitintervall in Abhängigkeit von einer zu übertragenden Information zu modulieren,
wobei die Schaltfrequenz in dem jeweiligen wenigstens einen zweiten Zeitintervall in einer Frequenzrampe (32, 33; 42-45; 53-55) in Abhängigkeit von der zu übertragenden Information verändert wird, und
wobei die Frequenzrampe jeweils so festgelegt wird, dass ein Mittelwert des Ausgangsstroms gemittelt über das jeweilige wenigstens eine zweite Zeitintervall dem vorgegebenen Ausgangsstrom des LED-Konverters entspricht;
und der LED-Konverter des Weiteren auf der Ausgangsseite einen Demodulator aufweist, der dazu eingerichtet ist, die Modulation der Schaltfrequenz zu erkennen.

2. LED-Konverter (3) nach Anspruch 1,
wobei die zu übertragende Information eine Folge von Datenbits umfasst, und wobei die Steuereinrichtung (16) eingerichtet ist, die Schaltfrequenz (31; 41; 51) in mehreren aufeinanderfolgenden der wenigstens einen zweiten Zeitintervalle (15; 91, 92) abhängig von der Folge der Datenbits zu modulieren.

3. LED-Konverter (3) nach einem der vorhergehenden Ansprüche,
wobei die primärseitig getaktete Wandlerschaltung (11; 90) einen LLC-Resonanzwandler aufweisend eine Halbbrückenschaltung mit einem ersten primärseitigen steuerbaren Schaltmittel und einem zweiten primärseitigen steuerbaren Schaltmittel umfasst, und
wobei die Steuereinrichtung (16) eingerichtet ist, jeweils die Schaltfrequenz (31; 41; 51) des ersten primärseitigen steuerbaren Schaltmittels (91) und eines zweiten primärseitigen steuerbaren Schaltmittels (92) zu modulieren.

4. LED-Konverter (3) nach einem der vorhergehenden Ansprüche, wobei der Demodulator mit einer Sekundärspule (99) der getakteten Wandlerschaltung (11; 90) gekoppelt ist.

5. System (1), umfassend
einen LED-Konverter (3) nach einem der vorhergehenden Ansprüche, und
ein Leuchtmittel (5), das wenigstens eine Leuchtdiode (6) umfasst, wobei das Leuchtmittel mit dem LED-Konverter (3) verbunden ist.

6. System (1) nach Anspruch 5,
wobei das Leuchtmittel einen weiteren Wandler aufweist, und
wobei der Demodulator dazu eingerichtet ist, den weiteren Wandler (110), beispielsweise einen Abwärtswandler, abhängig von der zu übertragenden Information zu steuern oder zu regeln.

7. System (1) nach Anspruch 6,
wobei die zu übertragende Information Status-, Helligkeits-, Farb- oder Betriebszustandsinformation ist.

8. System (1) nach einem der Ansprüche 5 bis 7,
wobei das Leuchtmittel (5) ein LED-Modul ist.

9. Verfahren zum Steuern einer getakteten Wandlerschaltung (11; 90) eines LED-Konverters (3), die eine Potentialbarriere (12) zwischen einer Eingangsseite (13) und einer Ausgangsseite (14) des LED-Konverters (3) aufweist, und wobei die getaktete Wandlerschaltung (11; 90) wenigstens ein primärseitiges steuerbares Schaltmittel (15; 91, 92) und eine Steuereinrichtung (16) zum getakteten Schalten des wenigstens einen primärseitigen steuerbaren Schaltmittels (15; 91, 92) aufweist,
wobei das Verfahren umfasst:
Einstellen einer konstanten Schaltfrequenz über mindestens ein erstes Zeitintervall zum getakteten Schalten des wenigstens einen primärseitigen steuerbaren Schaltmittels (15; 91, 92) und Regeln eines vorgegebenen Ausgangsstroms des LED-Konverters,
**gekennzeichnet durch**
Modulieren der Schaltfrequenz (31; 41; 51) in wenigstens einem zweiten Zeitintervall in Abhängigkeit von einer zu übertragenden Information, wobei das Modulieren umfasst: Ändern der Schaltfrequenz (31; 41; 51) in dem jeweiligen wenigstens einen zweiten Zeitintervall in einer Frequenzrampe (32, 33; 42-45; 53-55) in Abhängigkeit von der zu übertragenden Information, und
wobei die Frequenzrampe festgelegt wird, damit ein Mittelwert des Ausgangsstroms gemittelt über das jeweilige wenigstens eine zweite Zeitintervall dem vorgegebenen Ausgangsstrom des LED-Konverters entspricht;
und
Erkennen der Modulation der Schaltfrequenz mittels eines Demodulators auf der Ausgangsseite des LED-Konverters.

## Claims

1. LED converter (3) comprising
a clocked converter circuit (11; 90) having a potential barrier (12) between an input side (13) and an output side (14) of the LED converter (3), wherein the clocked converter circuit (11; 90) comprises at least one primary-side controllable switching means (15; 91, 92) and a control device (16) for clocked switching of the at least one primary-side controllable switching means (15; 91, 92),
wherein, for clocked switching of the at least one primary-side controllable switching means (15; 91, 92), the control device (16) is configured to set a constant switching frequency (31; 41; 51) over at least one first time interval in order to regulate a predetermined output current of the LED converter,
**characterized in that**
the control device (16) is configured to modulate the switching frequency (31; 41; 51) in at least one second time interval as a function of information to be transmitted,
wherein the switching frequency is varied in the respective at least one second time interval in a frequency ramp (32, 33; 42-45; 53-55) as a function of the information to be transmitted, and
wherein the frequency ramp is respectively established such that a mean value of the output current, averaged over the respective at least one second time interval, corresponds to the predetermined output current of the LED converter;
and the LED converter furthermore comprises, at the output side, a demodulator that is configured to detect the modulation of the switching frequency.

2. LED converter (3) according to Claim 1,
wherein the information to be transmitted comprises a sequence of data bits, and wherein the control device (16) is configured to modulate the switching frequency (31; 41; 51) in a plurality of successive time intervals of the at least one second time intervals (15; 91, 92) as a function of the sequence of data bits.

3. LED converter (3) according to one of the preceding claims,
wherein the primary-side clocked converter circuit (11; 90) comprises an LLC resonant converter having a half-bridge circuit with a first primary-side controllable switching means and a second primary-side controllable switching means, and
wherein the control device (16) is configured to modulate in each case the switching frequency (31; 41; 51) of the first primary-side controllable switching means (91) and of a second primary-side controllable switching means (92).

4. LED converter (3) according to one of the preceding claims, wherein the demodulator is coupled to a secondary coil (99) of the clocked converter circuit (11; 90).

5. System (1) comprising
an LED converter (3) according to one of the preceding claims, and
a lighting means (5) which comprises at least one light-emitting diode (6), wherein the lighting means is connected to the LED converter (3).

6. System (1) according to Claim 5,
wherein the lighting means comprises a further converter, and
wherein the demodulator is configured to control or regulate the further converter (110), for example a step-down converter, as a function of the information to be transmitted.

7. System (1) according to Claim 6,
wherein the information to be transmitted is status, brightness, color, or operating state information.

8. System (1) according to one of Claims 5 to 7,
wherein the lighting means (5) is an LED module.

9. Method for controlling a clocked converter circuit (11; 90) of an LED converter (3) which comprises a potential barrier (12) between an input side (13) and an output side (14) of the LED converter (3), and wherein the clocked converter circuit (11; 90) has at least one primary-side controllable switching means (15; 91, 92) and a control device (16) for clocked switching of the at least one primary-side controllable switching means (15; 91, 92),
wherein the method comprises:
setting a constant switching frequency over at least one first time interval for clocked switching of the at least one primary-side controllable switching means (15; 91, 92) and regulating a predetermined output current of the LED converter,
**characterized by**
modulating the switching frequency (31; 41; 51) in at least one second time interval as a function of information to be transmitted, wherein the modulation comprises: changing the switching frequency (31; 41; 51) in the respective at least one second time interval in a frequency ramp (32, 33; 42-45; 53-55) as a function of the information to be transmitted, and
wherein the frequency ramp is established so that a mean value of the output current, averaged over the respective at least one second time interval, corresponds to the predetermined output current of the LED converter;
and
detecting the modulation of the switching frequency by means of a demodulator at the output side of the LED converter.

## Revendications

1. Convertisseur de DEL (3), comprenant
un circuit transducteur (11 ; 90) cadencé, présentant une barrière de potentiel (12) entre un côté entrée (13) et un côté sortie (14) du convertisseur de DEL (3), le circuit transducteur (11 ; 90) cadencé comprenant au moins un moyen de commutation (15 ; 91, 92) commandable côté primaire et un dispositif de commande (16) pour la commutation cadencée dudit au moins un moyen de commutation (15 ; 91, 92) commandable côté primaire,
le dispositif de commande (16) étant conçu pour régler en continu durant au moins un premier intervalle de temps une fréquence de commutation (31 ; 41 ; 51) pour la régulation d'un courant de sortie prédéfini du convertisseur de DEL pour la commutation cadencée dudit au moins un moyen de commutation (15 ; 91, 92) commandable côté primaire,
**caractérisé en ce que**
le dispositif de commande (16) est conçu pour moduler la fréquence de commutation (31 ; 41 ; 51) durant au moins un deuxième intervalle de temps en fonction d'une information à transmettre,
la fréquence de commutation dans ledit au moins un deuxième intervalle de temps respectif étant modifiée en une rampe de fréquence (32, 33 ; 42-45 ; 53-55) en fonction de l'information à transmettre et
la rampe de fréquence étant fixée respectivement de telle façon qu'une valeur moyenne du courant de sortie calculée sur ledit au moins un deuxième intervalle de temps respectif correspond au courant de sortie prédéfini du convertisseur de DEL ;
et le convertisseur de DEL présentant en outre du côté sortie un démodulateur, qui est conçu pour détecter la modulation de la fréquence de commutation.

2. Convertisseur de DEL (3) selon la revendication 1,
dans lequel l'information à transmettre comprend une séquence de bits de données et dans lequel le dispositif de commande (16) est conçu pour moduler la fréquence de commutation (31 ; 41 ; 51) en fonction de la séquence de bits de données dans plusieurs desdits au moins un deuxième intervalle de temps (15 ; 91, 92) successifs.

3. Convertisseur de DEL (3) selon l'une quelconque des revendications précédentes,
dans lequel le circuit transducteur (11 ; 90) cadencé côté primaire comprend un convertisseur à résonance LLC présentant un circuit en demi-pont comprenant un premier moyen de commutation commandable côté primaire et un deuxième moyen de commutation commandable côté primaire et
dans lequel le dispositif de commande (16) est conçu pour moduler respectivement la fréquence de commutation (31 ; 41 ; 51) du premier moyen de commutation (91) commandable côté primaire et d'un deuxième moyen de commutation (92) commandable côté primaire.

4. Convertisseur de DEL (3) selon l'une quelconque des revendications précédentes, dans lequel le démodulateur est couplé à une bobine secondaire (99) du circuit transducteur (11 ; 90) cadencé.

5. Système (1), comprenant
un convertisseur de DEL (3) selon l'une quelconque des revendications précédentes et
un moyen d'éclairage (5) qui comprend au moins une diode électroluminescente (6), le moyen d'éclairage étant connecté au convertisseur de DEL (3).

6. Système (1) selon la revendication 5,
dans lequel le moyen d'éclairage présente un autre convertisseur et
dans lequel le démodulateur est conçu pour commander ou réguler l'autre convertisseur (110), par exemple un convertisseur abaisseur, en fonction de l'information à transmettre.

7. Système (1) selon la revendication 6,
dans lequel l'information à transmettre est une information de statut, de luminosité, de couleur ou d'état de fonctionnement.

8. Système (1) selon l'une quelconque des revendications 5 à 7,
dans lequel le moyen d'éclairage (5) est un module de DEL.

9. Procédé de commande d'un circuit transducteur (11 ; 90) cadencé d'un convertisseur de DEL (3), qui présente une barrière de potentiel (12) entre un côté entrée (13) et un côté sortie (14) du convertisseur de DEL (3) et dans lequel le circuit transducteur (11 ; 90) cadencé comprend au moins un moyen de commutation (15 ; 91, 92) commandable côté primaire et un dispositif de commande (16) pour la commutation cadencée dudit au moins un moyen de commutation (15 ; 91, 92) commandable côté primaire,
le procédé comprenant :
le réglage d'une fréquence de commutation constante durant au moins un premier intervalle de temps pour la commutation cadencée dudit au moins un premier moyen de commutation (15 ; 91, 92) commandable côté primaire et la régulation d'un courant de sortie prédéfini du convertisseur de DEL,
**caractérisé par**
la modulation de la fréquence de commutation (31 ; 41 ; 51) durant au moins un deuxième intervalle de temps en fonction d'une information à transmettre, la modulation comprenant : la modification de la fréquence de commutation (31 ; 41 ; 51) dans ledit au moins un deuxième intervalle de temps respectif en une rampe de fréquence (32, 33 ; 42-45 ; 53-55) en fonction de l'information à transmettre et
la rampe de fréquence étant fixée pour qu'une valeur moyenne du courant de sortie calculée sur ledit au moins un deuxième intervalle de temps respectif corresponde au courant de sortie prédéfini du convertisseur de DEL ;
et
la détection de la modulation de la fréquence de commutation au moyen d'un démodulateur sur le côté sortie du convertisseur de DEL.
